# EUROPÄISCHE PATENTSCHRIFT

(11) **EP 2 660 208 B1**
(45) Veröffentlichungstag und Bekanntmachung des Hinweises auf die Patenterteilung: **09.01.2019**
(21) Anmeldenummer: 13002379.9
(22) Anmeldetag: 03.05.2013
(51) Int. Cl.: C02F 1/00, C02F 3/12, B01D 21/00, B01D 21/34, C02F 3/22

(54) **KLÄRANLAGE MIT SIPHONÜBERLAUF**
SEWAGE TREATMENT PLANT WITH SIPHON OVERFLOW
INSTALLATION D'ÉPURATION AVEC DÉBORDEMENT À SIPHON

(30) Priorität: 04.05.2012 DE 202012004597 U
(43) Veröffentlichungstag der Anmeldung: 06.11.2013
(73) Patentinhaber: KLARO GmbH, 95447 Bayreuth (DE)
(72) Erfinder: SCHÜTZ, Waldemar, 95445 Bayreuth (DE)
(74) Vertreter: Spranger, Stephan

(56) Entgegenhaltungen:
- EP-A1- 2 208 711
- BE-A3- 1 017 220
- DE-B3-102011 009 138
- DE-U1- 20 020 795
- DE-U1- 20 105 661

## Beschreibung

Die Erfindung betrifft eine Kläranlage nach dem Aufstaubetrieb gemäß dem Oberbegriff des Anspruchs 1.

Es sind Belebungsanlagen im Aufstaubetrieb, auch als SBR (Sequency Batch Reactor) bezeichnet, mit einem Vorspeicher und/oder einer Vorklärung bekannt. Diese Anlagen lassen sich nach der Art ihrer Arbeitsweise im Wesentlichen in zwei Varianten einteilen.

Bei Belebungsanlagen im Aufstaubetrieb der ersten Variante erfolgt die Abwasserzuführung kontinuierlich. Es findet somit ein stetiger Zulauf von Abwasser in das Reaktorbecken statt, wobei der Klarwasserabzug zunächst geschlossen ist. Mit dem Zulauf von Abwasser steigt der Wasserspiegel im Reaktorbecken an. Während der Abwasserzuführung laufen im Reaktorbecken nacheinander die Belüftungsphase, die Absetzphase und die Abzugsphase ab, wobei weiter Abwasser in den Reaktorbecken zuläuft. Die Beschickungsdauer entspricht der Zyklusdauer.

Nachteilig an dieser Prozessvariante ist, dass ungereinigtes Abwasser auch während der Absetzphase oder sogar während der Klarwasserabzugsphase in das Reaktorbecken fließt. Dadurch kann es zu einer Verschlechterung des Klarwasserablaufs kommen. Diesem Problem muss durch konstruktive Maßnahmen, wie etwa mittels in das Reaktorbecken eingehängte Trennvorrichtungen bzw. Separatoren entgegengewirkt werden. In dieser Trennvorrichtung findet eine Separation von bereits gereinigtem Abwasser und Belebtschlamm statt. Der Einsatz solcher Trennvorrichtungen bringt jedoch wiederum den Nachteil mit sich, dass eine Verschlammung des Innenraums mit der Zeit ansteigt, womit die Gefahr eines Schlammabtriebs verbunden ist. Zudem funktionieren die Trennvorrichtungen nur, sobald sich in der Vorrichtung eine beständige Abwärtsbewegung des Schlammes erreichen lässt.

Bei Belebungsanlagen im Aufstaubetrieb der zweiten Variante erfolgt die Abwasserzuführung schubweise. Dabei wird das Abwasser in bestimmten Zeitabständen dem Reaktorbecken zugeführt. Bei dieser Prozessvariante sind die beiden Reinigungsstufen nur indirekt miteinander verbunden und es sind Fördereinrichtungen wie elektrische Pumpen oder Druckluftheber notwendig, um das Abwasser in das Reaktorbecken zu fördern. Dies hat den Nachteil, dass zum Betrieb der Fördereinrichtungen Energie aufgewendet werden muss, was entsprechende Betriebskosten verursacht. Darüber hinaus müssen insbesondere Pumpen gewartet werden.

Die deutsche Gebrauchsmusterschrift DE 200 20 795 U1 beschreibt eine Vorrichtung zum Behandeln von Abwasser, welche einen belüftbaren Siphon aufweist, der dort in einem Überlauf zwischen einer Reaktionskammer und einem Klarwasserauslass angeordnet ist, wobei dieser Siphon keine Druckluftzufuhr zur Ausbildung einer Luftblase aufweist und nicht mit seinem oberen Siphonbogenabschnitt in einer Trennwand angeordnet ist.

Das Dokument BE 1 017 220 A3 zeigt eine Kläranlage mit einem belüftbaren Siphon, der mit einem Druckluftheber zwischen einem Vorklärbecken und einem Reaktorbecken in Wirkverbindung steht. Dieser Siphon weist keine Anordnung zur Ausbildung einer Luftblase auf, wobei der aus diesem Dokument bekannte erste obere Siphonbogenabschnitt nicht an eine Druckluftleitung angeschlossen ist, sondern der Druckluftheber mit dem Druckluftanschluss für ein zugehöriges Druckluft- und Wassersteigrohr.

Die deutsche Gebrauchsmusterschrift DE 201 05 661 U1 beschreibt eine Kleinkläranlage mit einem Zulauf für ungereinigtes Abwasser, mit mindestens einem Klärbereich mit einer Abpumpvorrichtung für gereinigtes Abwasser nach einem Drucklufthebesystem, wobei die Abpumpvorrichtung in Fließrichtung mindestens einen aufwärts gerichteten ersten Teil zur Rückhaltung von Schwimmstoffen, einen abwärts gerichteten zweiten Teil und aufwärts gerichteten dritten Teil aufweist und mit einer Einrichtung zum Begrenzen des niedrigsten Wasserstandes in dem Klärbereich, wobei diese Einrichtung von einer über den höchsten Wasserstand im Klärbereich hinausragenden und saugseitig auf Höhe des tiefsten Wasserstandes an die Abpumpvorrichtung angeschlossenen Belüftungsleitung gebildet ist. Gemäß diesem Dokument wird das Sperren und das Freigeben eines Überlaufs aus dem Vorklärbecken in ein Reaktionsbecken und von dem Reaktionsbecken in einen Auslauf nicht durch eine Siphonvorrichtung erreicht, sondern durch Drucklufthebesysteme, wobei jeweils ein oberer Siphonabschnitt dem Drucklufthebesystem stromaufwärts vorgeschaltet ist, der durch ein Belüftungsrohr mit der Umgebung verbunden ist, das wirksam wird und den Überlauf unterbricht, wenn die Einmündung des Belüftungsrohres in den oberen Siphonabschnitt unterschritten wird. Das Dokument zeigt somit also einen belüftbaren Siphonabschnitt, der mit einem Druckluftheber zwischen einem Vorklärbecken und einem Reaktorbecken in Wirkverbindung steht. Dieser Siphon weist keine Druckluftzufuhr zur Ausbildung einer Luftblase auf. Außerdem ist dort der erste obere Siphonbogenabschnitt nicht an eine Druckluftleitung angeschlossen, sondern lediglich die Druckluftheber weisen entsprechende Druckluftanschlüsse für zugehörige Druckluft- und Wassersteigrohre auf.

Die Europäische Patentanmeldung EP 2 208 711 A1 betrifft eine klärtechnische Anlage, welche Drucklufthebesysteme aufweist, die nicht als Siphon ausgebildet sind und auf der Ansaugseite lediglich jeweils ein senkrechtes Saugrohr aufweisen, um das minimale Absaugniveau zu begrenzen, wobei oberhalb der Absaugöffnung Zylinderrohrstücke mit zwei Sensoren angeordnet sind, welche zwei Schaltniveaus für ein Ein- und Ausschalten der Drucklufthebesysteme aufweisen.

Die deutsche Patentschrift DE 10 2011 009 138 B3 betrifft eine biologische Kläranlage, welche Drucklufthebesysteme aufweist, die nicht als Siphon ausgebildet sind und auf der Ansaugseite lediglich jeweils ein senkrechtes Saugrohr aufweisen, um das minimale Absaugniveau in den unterschiedlichen Bereichen in unterschiedlichen Betriebsphasen zu begrenzen, wobei im Reaktorbecken zur Steuerung der Klarwasserentnahme ein zusätzlicher Schwimmschalter vorgesehen ist.

Es ist die Aufgabe der vorliegenden Erfindung, eine Kläranlage bereit zu stellen, welche die oben genannten Nachteile überwindet und einen einfach steuerbaren, konstruktiv einfachen und wartungsarmen Zulauf von Abwasser in ein Reaktorbecken erlaubt.

Diese und andere Aufgaben der vorliegenden Erfindung werden mit einer Kläranlage mit den Merkmalen des Anspruchs 1 gelöst.

Bevorzugte Ausgestaltungen und Weiterbildungen sind in den abhängigen Ansprüchen dargelegt.

Gemäß der vorliegenden Erfindung weist eine Kläranlage nach dem quasi-geschlossenen Aufstaubetrieb ein Vorklärbecken, ein Reaktorbecken, einen Überlauf vom Vorklärbecken in das Reaktorbecken, um vorgeklärtes Abwasser in das Reaktorbecken fließen zu lassen, eine im Reaktorbecken angeordnete Belüftungseinheit, einen Klarwasserabzug und einen Überschussschlammabzug auf. Der Überlauf ist als Siphonvorrichtung ausgebildet, die an eine Druckluftleitung gekoppelt ist, wobei die Siphonvorrichtung über die Druckluftleitung belüftbar ist, um eine Luftblase in der Siphonvorrichtung auszubilden, welche den Überlauf des vorgeklärten Abwassers aus dem Vorklärbecken in das Reaktorbecken unterbindet, und wobei die Siphonvorrichtung über die Druckluftleitung entlüftbar ist, um die Luftblase aus der Siphonvorrichtung ablassen zu können, so dass der Überlauf des vorgeklärten Abwassers ermöglicht wird.

Die Kläranlage verfügt mit der Siphonvorrichtung über einen robusten, unempfindlichen Überlaufregler, der ohne Einsatz von mechanischen oder elektrischen Komponenten auskommt.

Die Belüftung und Entlüftung der Siphonvorrichtung erfolgt vorzugsweise unter Steuerung einer Steuervorrichtung jeweils innerhalb eines Reinigungszyklus. Zu Beginn der Belüftungsphase wird die Siphonvorrichtung entlüftet, so dass das Abwasser in das Reaktorbecken fließt. Am Ende der Belüftungsphase wird die Siphonvorrichtung belüftet, um die Abwasserzuführung wieder zu unterbrechen. Das Abwasser wird zeitweilig im Vorklärbecken gepuffert. Die Absetz- und Abzugsphasen laufen dann im Reaktorbecken ohne Abwasserzuführung ab.

Weitere Aufgaben, Vorteile, Merkmale und Ausgestaltungen der vorliegenden Erfindung werden ersichtlich aus der folgenden detaillierten Beschreibung bevorzugter Ausführungsformen, mit Bezug auf die Zeichnungen:
- Fig. 1: zeigt eine Querschnittsansicht einer beispielhaften Kleinkläranlage;
- Fig. 2: zeigt eine Siphonvorrichtung in einem Zustand, in der ein Fluss durch die Siphonvorrichtung stattfindet;
- Fig. 3: zeigt die Siphonvorrichtung der Fig. 2 in einem Zustand, in der ein Fluss durch die Siphonvorrichtung unterbunden ist; und
- Fig. 4: zeigt eine weitere Siphonvorrichtung.

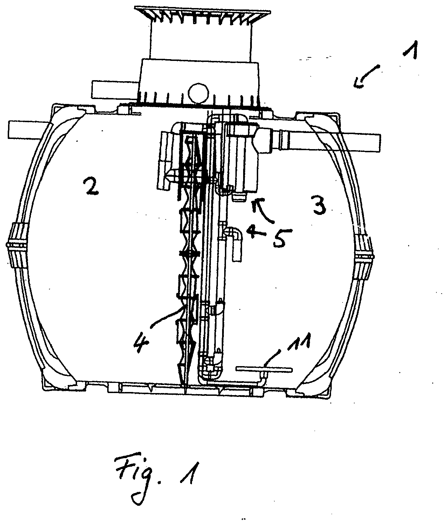

Die Fig. 1 zeigt eine beispielhafte Kleinkläranlage 1 mit einem Vorklärbecken 2 und einem Reaktorbecken 3, die durch eine Trennwand 4 getrennt sind. An der Trennwand 4 können verschiedene, zum Betrieb der Kleinkläranlage 1 vorgesehene Einrichtungen 5 angeordnet sein. Diese Einrichtungen können beispielsweise einen Überlauf, einen Klarwasserabzug und einen Überschussschlammabzug umfassen. Der Klarwasserabzug und der Überschussschlammabzug können als Druckluftheber realisiert sein. In dem Reaktorbecken 3 kann eine Belüftungseinrichtung 11 vorgesehen sein. Abwasser wird über einen nicht dargestellten Zulauf in das Vorklärbecken 2 zugeführt, wo das Abwasser 8 gepuffert wird. Über den Überlauf gelangt das vorgeklärte Abwasser in das Reaktorbecken 3, wo das Abwasser 9 in den Phasen belüften und absetzen behandelt und Klarwasser in der Abzugsphase abgezogen wird.

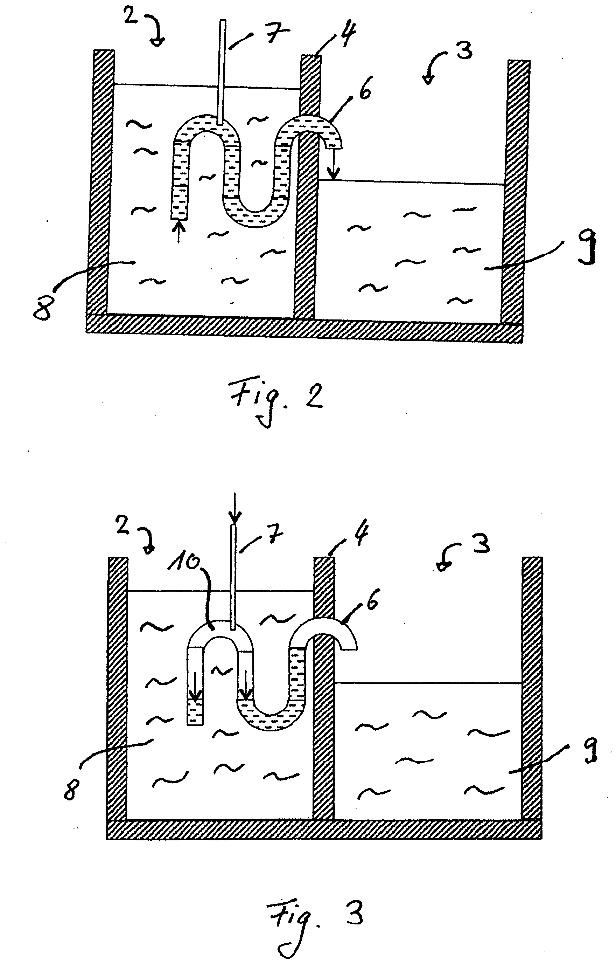

Die Fig. 2 zeigt eine vollbiologische Kleinkläranlage mit einem Vorklärbecken 2 und einem Reaktorbecken 3. In dem Vorklärbecken 2 befindet sich Abwasser, das über einen nicht dargestellten Zulauf zugeführt wird. In der Fig. 2 ist weiter ein Überlauf in Form einer Siphonvorrichtung 6 ausgebildet. Die Siphonvorrichtung 6 ist in der Fig. 2 durch die Trennwand 4 hindurch verlaufend und unterhalb einer Füllhöhe des Abwassers im Vorklärbecken 2 angeordnet. Die Siphonvorrichtung 6 ist an eine Druckluftleitung 7 gekoppelt, mittels der die Siphonvorrichtung 6 belüftet und entlüftet werden kann. So kann durch die Druckluftleitung 7 Druckluft in einen ersten oberen Siphonbogenabschnitt zugeführt werden, umgekehrt kann sich in dem ersten oberen Siphonbogenabschnitt befindliche Luft abgelassen werden. Zu diesem Zweck kann die Druckluftleitung 7 an eine Drucklufteinrichtung gekoppelt sein, welche die Druckluftleitung unter Druck setzen kann. Die Drucklufteinrichtung kann auch dazu eingerichtet sein, Luftdruck in der Druckluftleitung 7 abzubauen oder abzulassen. Alternativ kann ein Ventil, insbesondere ein Magnetventil, als Entlüftungsventil vorgesehen sein, um Luft aus der Druckluftleitung 7 abzulassen.

In der Fig. 2 ist der Zustand dargestellt, in dem die Druckluftleitung 7 nicht mit Druckluft unter Druck steht, was zum Beispiel der Fall ist, wenn das Entlüftungsventil für die Druckluftleitung 7 offen steht. In diesem Zustand kann sich in dem Vorklärbecken 2 befindliches Abwasser durch einen Einlassabschnitt in die Siphonvorrichtung 6 einströmen, durch die Siphonvorrichtung 6 hindurch strömen und aus einem Auslassabschnitt der Siphonvorrichtung 6 in das Reaktorbecken 3 fließen, wie durch die Pfeile angezeigt. Die Siphonvorrichtung 6 befindet sich somit in einem Zustand des aktiven, offenen Überlaufs.

Wenn, wie in Fig. 3 dargestellt, die Siphonvorrichtung 6 über die Druckluftleitung 7 belüftet wird, bildet sich in der Siphonvorrichtung 6 eine Luftblase 10 aus. Die unter Druck stehende Luft der Luftblase 10 drückt gegen das am Einlassabschnitt anstehende Abwasser aus dem Vorklärbecken 2, wie durch den Pfeil angezeigt. Das Einströmen von Abwasser aus dem Vorklärbecken 2 in die Siphonvorrichtung 6 wird dadurch unterbunden. Es findet daher kein Überlauf von vorgeklärtem Abwasser aus dem Vorklärbecken 2 in das Reaktorbecken 3 statt, der Überlauf ist gesperrt.

Um den Überlauf wieder zu aktivieren, wird die Siphonvorrichtung 6 über die Druckluftleitung 7 entlüftet, etwa indem das Entlüftungsventil geöffnet wird. Dadurch wird die Luft aus der Luftblase 10 abgelassen und die Luftblase 10 entweicht bzw. verschwindet. Die Siphonvorrichtung 6 befindet sich nun wieder in dem in Fig. 2 gezeigten aktiven Zustand, in dem ein Überlauf stattfinden kann.

Die Siphonvorrichtung 6 macht es daher auf einfache Weise möglich, einen Überlauf von dem Vorklärbecken 2 in das Reaktorbecken 3 zu erlauben und zu öffnen, und diesen zu unterbinden und zu schließen, indem eine Luftblase 10 durch Belüften ausgebildet oder durch Entlüften abgebaut wird. Die Siphonvorrichtung 6 kann somit als eine Art schaltbares Ventil betrachtet werden, das ohne aufwändige konstruktive mechanische und/oder elektrische Komponenten auskommt, die einem Verschleiß unterliegen, oder wo eine Gefahr besteht, dass sie sich durch eventuell im Abwasser mitgeführte Stoffe zusetzen. Darüber hinaus erfolgt der Überlauf von Abwasser durch die Siphonvorrichtung 6 selbsttätig auf Grund der Siphonwirkung, ohne dass zur Förderung von Abwasser Energie aufgewendet werden muss. Im gesperrten Zustand wird die Absperrung der Siphonvorrichtung durch die ausgebildete Luftblase 10 erreicht. Es ist daher auch kein Energieaufwand notwendig, um die Absperrung aufrecht zu erhalten. Die Siphonvorrichtung 6 stellt damit eine konstruktiv einfache, verschleißfreie, in der Herstellung und im Betrieb günstige, sowie einfach zu steuernde Realisierung eines Überlaufs dar.

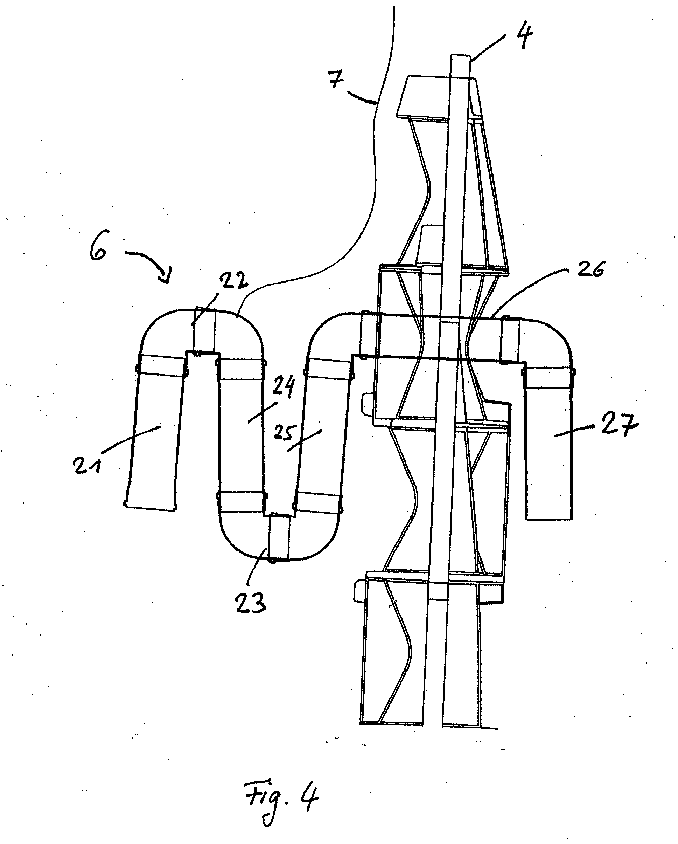

In der Fig. 4 ist eine weitere mögliche Ausführung einer Siphonvorrichtung 6 dargestellt. Wie in der Fig. 4 dargestellt, kann die Siphonvorrichtung 6 durch bekannte und handelsübliche Rohre und Krümmer gebildet werden. Die Siphonvorrichtung 6 der Fig. 4 weist ein Zulaufrohr 21 auf, an das sich ein oberer Siphonbogenabschnitt 22 anschließt, der beispielsweise aus zwei miteinander verbundenen Bogenstücken gebildet sein kann. Ein Rohr 24 verbindet mit einem unteren Siphonbogenabschnitt 23, der ebenfalls aus zwei miteinander verbundenen Bogenstücken gebildet sein kann. Ein weiteres Rohr 25 verbindet mit einem zweiten oberen Siphonbogenabschnitt 26, der aus zwei Bogenstücken und einem dazwischen eingesetzten Rohr zur Verlängerung gebildet sein kann. Daran kann sich ein Auslaufrohr 27 anschließen. Wie in der Fig. 4 dargestellt, kann der zweite obere Siphonbogenabschnitt 26 durch die Trennwand 4 hindurch verlaufend ausgebildet sein. Dies ist jedoch nicht beschränkend, und es ist ebenso möglich, dass der erste obere Siphonbogenabschnitt 22 oder der untere Siphonbogenabschnitt 23 durch die Trennwand hindurch verlaufend angeordnet sind. Wie in der Fig. 4 gezeigt, kann die Druckluftleitung 7 als Schlauch ausgebildet sein.

## Patentansprüche

1. Kläranlage (1) für einen Aufstaubetrieb, aufweisend
ein Vorklärbecken (2);
ein Reaktorbecken (3);
eine Trennwand (4) zwischen dem Vorklärbecken (2) und dem Reaktorbecken (3) und einen Überlauf (6) vom Vorklärbecken (2) in das Reaktorbecken (3), um vorgeklärtes Abwasser in das Reaktorbecken (3) fließen zu lassen;
wobei der Überlauf als Siphonvorrichtung (6) ausgebildet ist, die an eine Druckluftleitung (7) gekoppelt ist und ein Zulaufrohr (21), einen ersten oberen Siphonbogenabschnitt (22), ein erstes Verbindungsrohr (24), einen unteren Siphonbogenabschnitt (23), ein zweites Verbindungsrohr (25), einen zweiten oberen Siphonbogenabschnitt (26) und ein Auslaufrohr (27) aufweist, wobei einer der Siphonbogenabschnitte (22, 23 oder 26) durch die Trennwand (4) hindurch angeordnet ist, wobei die Siphonvorrichtung (6) über die mit dem ersten oberen Siphonbogenabschnitt (22) verbundene Druckluftleitung (7) belüftbar ist, so dass sich eine Luftblase (10) in der Siphonvorrichtung (6) ausbildet, welche den Überlauf des vorgeklärten Abwassers aus dem Vorklärbecken in das Reaktorbecken unterbindet, und wobei die Siphonvorrichtung (6) über die Druckluftleitung (7) entlüftbar ist, so dass die Luftblase (10) aus der Siphonvorrichtung (6) ablassbar ist, so dass der Überlauf des vorgeklärten Abwassers zur Verfügung steht.

2. Kläranlage (1) nach nach Anspruch 1, **dadurch gekennzeichnet, dass** sie ferner aufweist:
eine Belüftungseinrichtung (11), die eingerichtet ist, während einer Belüftungsphase betrieben zu werden; und
eine Steuervorrichtung zum Steuern des Betriebs der Kläranlage (1),
wobei die Steuervorrichtung eingerichtet ist, die Belüftung und Entlüftung der Siphonvorrichtung (6) zu steuern, derart, dass zu Beginn der Belüftungsphase die Siphonvorrichtung entlüftet wird, um den Überlauf von Abwasser aus dem Vorklärbecken (2) in das Reaktorbecken (3) zu erlauben, und dass zum Ende der Belüftungsphase die Siphonvorrichtung belüftet wird, um den Überlauf von Abwasser aus dem Vorklärbecken in das Reaktorbecken zu unterbinden.

3. Kläranlage (1) nach Anspruch 1 oder Anspruch 2, **dadurch gekennzeichnet, dass** die Kläranlage eine vollbiologische Kleinkläranlage ist.

## Claims

1. Wastewater treatment plant (1) for sequencing batch operation, having a primary clarifier (2);
a reactor tank (3);
a partition (4) between the primary clarifier (2) and the reactor tank (3), and
an overflow (6) from the primary clarifier (2) into the reactor tank (3), in order to allow preclarified wastewater to flow into the reactor tank (3);
wherein the overflow is designed as a siphon device (6) that is coupled to a compressed-air line (7) and that has a feed pipe (21), a first upper siphon bend section (22), a first connecting pipe (24), a lower siphon bend section (23), a second connecting pipe (25), a second upper siphon bend section (26), and a discharge pipe (27), wherein one of the siphon bend sections (22, 23, or 26) is arranged to pass through the partition (4), wherein the siphon device (6) can be supplied with air through the compressed-air line (7) connected to the first upper siphon bend section (22) so that an air lock (10) forms in the siphon device (6), which prevents the overflow of the preclarified wastewater from the primary clarifier into the reactor tank, and wherein the siphon device (6) can be bled through the compressed-air line (7) so that the air lock (10) can be released from the siphon device (6) so that the overflow of the preclarified wastewater is available.

2. Wastewater treatment plant (1) according to claim 1, **characterized in that** it additionally has:
an aerator (11), which is configured to be operated during an aeration phase; and
a control device for controlling operation of the wastewater treatment plant (1),
wherein the control device is configured to control the supplying with air and bleeding of the siphon device (6) in such a manner that the siphon device is bled at the start of the aeration phase in order to permit the overflow of wastewater out of the primary clarifier (2) into the reactor tank (3), and that the siphon device is supplied with air at the end of the aeration phase in order to prevent the overflow of wastewater from the primary clarifier into the reactor tank.

3. Wastewater treatment plant (1) according to claim 1 or claim 2, **characterized in that** the wastewater treatment plant is a fully biological small wastewater treatment system.

## Revendications

1. Installation d'épuration (1) à accumulation, comportant
un décanteur primaire (2) ;
un réacteur (3) ;
une paroi de séparation (4) entre le décanteur (2) et le réacteur (3) et un débordement (6) du décanteur (2) dans le réacteur (3) pour évacuer les eaux usées décantées dans le réacteur (3) ;
le débordement étant configuré comme un dispositif à siphon (6), couplé à une conduite d'air surpressé (7) et présentant un tuyau d'arrivée (21), un premier segment coudé de siphon supérieur (22), un premier tuyau de connexion (24), un segment coudé de siphon inférieur (23), un deuxième tuyau de connexion (25), un deuxième segment coudé de siphon supérieur(26) et un tuyau d'évacuation (27), un des segments coudés de siphon (22, 23, ou 26) traversant la paroi de séparation (4), le dispositif à siphon (6) pouvant être ventilé par la conduite d'air surpressé (7) connectée au premier segment coudé supérieur (22) de sorte qu'une bulle d'air (10) se forme dans le dispositif à siphon (6) qui empêche le débordement des eaux usées décantées du décanteur dans le réacteur, et le dispositif à siphon (6) pouvant être purgé par la conduite d'air surpressé (7), de sorte que la bulle d'air (10) peut être éliminée du dispositif à siphon (6) et que le débordement des eaux usées décantées est disponible.

2. Installation d'épuration (1) selon la revendication 1, **caractérisée en ce que** elle comporte de plus un dispositif de ventilation (11), conçu pour être utilisé pendant une phase de ventilation ; et
un dispositif de commande pour piloter le fonctionnement de l'installation d'épuration (1), le dispositif de commande étant conçu pour piloter la ventilation et la purge du dispositif à siphon (6) de sorte qu'au début de la phase de ventilation, le dispositif à siphon est purgé pour permettre le débordement des eaux usées du bassin de décantation (2) dans le réacteur (3) et qu'à la fin de la phase de ventilation, le dispositif à siphon est ventilé pour empêcher le débordement des eaux usées du bassin de décantation dans le réacteur.

3. Installation d'épuration (1) selon la revendication 1 ou la revendication 2, **caractérisée en ce que** l'installation d'épuration est une installation d'épuration entièrement biologique.
